(19) Europäisches Patentamt
European Patent Office
Office européen des brevets

(11) **EP 1 065 285 B2**

(12) **NOUVEAU FASCICULE DE BREVET EUROPEEN**
Après la procédure d'opposition

(45) Date de publication et mention de la décision concernant l'opposition:
**13.01.2016   Bulletin 2016/02**

(45) Mention de la délivrance du brevet:
**04.09.2002   Bulletin 2002/36**

(21) Numéro de dépôt: **00401868.5**

(22) Date de dépôt: **30.06.2000**

(51) Int Cl.:
**C21D 8/04** $^{(2006.01)}$   **C21D 9/48** $^{(2006.01)}$

(54) **Tôle d'acier à bas carbone calmé à l'aluminium pour emballage.**

Aluminiumberuhigtes, niedriggekohltes Stahlband für Behälter

Aluminum killed low carbon steel sheet for cans

(84) Etats contractants désignés:
**AT BE CH CY DE DK ES FI FR GB GR IE IT LI LU MC NL PT SE**

(30) Priorité:  **01.07.1999   FR 9908414**

(43) Date de publication de la demande:
**03.01.2001   Bulletin 2001/01**

(73) Titulaire: **ArcelorMittal**
**1160 Luxembourg (LU)**

(72) Inventeur: **Bouzekri, Mohamed**
**57120 Rombas (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**EP-A- 0 360 955      DE-C- 19 622 164**
**FR-A- 2 472 021      GB-A- 2 086 425**
**US-A- 4 698 103**

• **PATENT ABSTRACTS OF JAPAN vol. 006, no. 044 (C-095), 19 mars 1982 (1982-03-19) & JP 56 158822 A (NIPPON STEEL CORP), 7 décembre 1981 (1981-12-07)**

EP 1 065 285 B2

**Description**

La présente invention concerne le domaine des aciers pour application dans le domaine de l'emballage métallique, alimentaire, non alimentaire ou industriel.

Les aciers élaborés pour des utilisations propres à l'emballage métallique se différencient surtout des tôles minces par leurs caractéristiques physiques.

Les épaisseurs des tôles d'acier pour emballage varient de 0,12 mm à 0,25 mm pour la plus grande majorité des utilisations, mais peuvent atteindre des épaisseurs plus importantes, jusqu'à 0,49 mm pour des applications très particulières. C'est par exemple le cas de certains emballages non alimentaires, comme par exemple certains aérosols, ou le cas de certains emballages industriels. Elles peuvent également descendre jusqu'à 0,08 mm, par exemple dans le cas des barquettes alimentaires.

Les tôles d'acier pour emballage sont habituellement revêtues d'un revêtement métallique (étain, refondu ou non, ou chrome) sur lequel est généralement déposé un revêtement organique (vernis, encres, films plastiques).

Dans le cas des emballages deux-pièces, ceux-ci sont réalisés par emboutissage sous serre-flan, ou par emboutissage/repassage pour les boites boissons, et sont généralement des boites axisymétriques, cylindriques ou tronconiques. Cependant, les emballagistes montrent un intérêt de plus en plus marqué pour des aciers d'épaisseurs toujours plus faibles, de 0,12 mm à 0,075 mm et, dans le souci de se différencier des concurrents, ils cherchent à innover dans des formes de plus en plus complexes. Aussi trouvons nous maintenant des boites de formes originales, fabriquées dans des tôles d'acier de faibles épaisseurs qui, bien que présentant de plus grandes difficultés de formage, doivent répondre aux critères d'utilisation (tenue mécanique de l'emballage, résistance à la charge axiale qu'ils subissent lors de leur entreposage en empilement, résistance à la surpression interne qu'ils subissent pendant le traitement thermique de stérilisation et à la dépression interne qu'ils subissent après le refroidissement) et donc présenter une très haute résistance mécanique.

Ainsi, la mise en oeuvre et la performance de ces emballages dépendent d'un certain nombre de caractéristiques mécaniques de l'acier :

- le coefficient d'anisotropie planaire $\Delta C$ aniso,
- le coefficient de Lankford,
- la limite d'élasticité Re,
- la résistance maximale à la rupture Rm,
- l'allongement A%,
- l'allongement réparti Ag%.

Pour conférer à l'emballage une tenue mécanique équivalente à épaisseur d'acier inférieure, il est indispensable que la tôle d'acier présente une résistance maximale à rupture plus élevée.

Pour la réalisation d'emballages, il est connu d'utiliser des aciers standards à bas carbone et bas manganèse, calmés à l'aluminium.

La teneur en carbone visée habituellement pour ce type d'acier est comprise entre 0,020% et 0,040%, car des teneurs supérieures à 0,040% conduisent à des caractéristiques mécaniques moins favorables à l'emboutissage et des teneurs inférieures à 0,015% induisent une propension au vieillissement naturel de la tôle, en dépit d'un vieillissement au recuit.

La teneur en manganèse est reduite au maximum en raison d'un effet défavorable de cet élément sur la valeur du coefficient de Lankford pour des aciers non dégazés sous vide. Ainsi la teneur en manganèse visée est comprise entre 0,15 et 0,25%.

Ces tôles d'acier sont réalisées par laminage à froid d'une bande à chaud, avec un taux de laminage à froid compris entre 75% et plus de 90%, suivi d'un recuit en continu à une température comprise entre 640 et 700°C, et d'un second laminage à froid avec un taux d'allongement au cours de ce second laminage à froid variable entre 2% et 45% selon le niveau de résistance maximale à la rupture Rm visé.

Mais, pour les aciers à bas carbone calmés à l'aluminium, des caractéristiques mécaniques élevées sont associées à une capacité d'allongement faible. Cette faible ductilité, outre le fait qu'elle est défavorable à la mise en forme de l'emballage, entraîne dans cette mise en forme un amincissement des parois qui va être défavorable aux performances de l'emballage.

Ainsi par exemple un acier bas carbone calmé aluminium présentant une résistance maximale à la rupture Rm de l'ordre de 550 MPa, présentera un taux d'allongement A% de l'ordre de 1 à 3% seulement.

GB-A-2 086 425 montre un procédé de fabrication d'une tôle d'acier laminée à froid présentant une aptitude à l'emboutissage profond et une résistance au viellissement excellentes dans lequel on fabrique un brame contenant de 0,01 à 0,03 % de carbone, de 0,05 à 0,30 % de manganèse, de 0,020 à 0,100 % d'aluminium soluble, pas plus de 0,0050 % d'azote, le reste étant du fer et des impuretés inévitables; on lamine à chaud le brame, on lamine à froid après bobinage l'acier laminé à chaud et, dans une ligne de recuit en continu, on maintient l'acier à une température comprise entre les points de transformation $A_1$ et $A_3$ pendant plus de 10 secondes, on le refroidit à partir de températures supérieures à 650 °C à une vitesse de refroidissement supérieure à 200 °C par seconde et on effectue un vieillissement accéléré en le maintenant à des températures comprises entre 300 et 500 °C pendant plus de 30 secondes.

La présente invention a pour but de proposer une tôle d'acier bas carbone calmé aluminium pour emballage qui présente, à niveau de résistance maximale à la rupture équivalente à celle des aciers bas carbone calmés aluminium de l'état de la technique, un taux d'allongement A% plus élevé.

Pour obtenir ces caractéristiques, l'invention a pour objet un procédé de fabrication d'une bande d'acier bas carbone calmé à l'aluminium pour emballage, dans lequel :

- on approvisionne une bande d'acier laminée à chaud comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables,
- on effectue un premier laminage à froid de la bande,
- on soumet la bande laminée à froid à un recuit,
- on effectue éventuellement un laminage à froid secondaire,

caractérisé en ce que le recuit est un recuit continu dont le cycle comporte une montée en température jusqu'à une température supérieure à la température de début de transformation perlitique $Ac_1$, un maintien de la bande au dessus de cette température pendant une durée supérieure à 10 secondes, et un refroidissement rapide de la bande jusqu'à une température inférieure à 350°C à une vitesse de refroidissement comprise entre 100 et 500 °C/s.

Selon d'autres caractéristiques du procédé selon l'invention :

- la bande est maintenue au cours du recuit à une température comprise entre $Ac_1$ et 800°C, pendant une durée de 10 secondes à 2 minutes ;
- la bande est refroidie à une vitesse supérieure à 100°C par seconde jusqu'à la température ambiante.

L'invention concerne également une tôle d'acier bas carbone calmé à l'aluminium pour emballage, comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables, fabriquée selon le procédé ci-dessus,

caractérisé en ce qu'elle présente à l'état vieilli un taux d'allongement A% satisfaisant la relation :

$$(670 - Rm) / 14 \leq A\% \leq (720 - Rm) / 17$$

Rm étant la résistance maximale à la rupture de l'acier, exprimée en MPa.

Selon d'autres caractéristiques de la tôle, l'acier comporte du carbone à l'état libre et/ou quelques carbures précipités à basse température, et présente un nombre de grains par mm$^2$ supérieur à 20000.

Les caractéristiques et avantages apparaîtront plus clairement dans la description qui suit, donnée uniquement à titre d'exemple, faite en référence aux figures jointes en annexe.

Les figures 1 et 2 sont des diagrammes montrant l'influence de la température de recuit sur la résistance maximale à rupture Rm.

La figure 3 est un diagramme montrant l'influence de la vitesse de refroidissement sur la résistance maximale à rupture Rm.

La figure 4 est un diagramme montrant l'influence de la vitesse de refroidissement sur la résistance maximale à rupture Rm et le taux d'allongement A%.

La figure 5 est un diagramme montrant l'influence de la vitesse de refroidissement sur la dureté HR30T.

Plusieurs essais ont été réalisés, tout d'abord en laboratoire puis en conditions industrielles, pour valider les caractéristiques de l'invention. Les résultats complets de deux de ces essais vont maintenant être décrits.

Ces essais concernent deux bobines à froid en acier à bas carbone calmé à l'aluminium, dont les caractéristiques sont reproduites dans le tableau 1 ci-après.

Tableau 1

| | Teneurs ($10^{-3}$ %) | | | | Laminage à chaud | | | Laminage à froid | |
|---|---|---|---|---|---|---|---|---|---|
| | C | Mn | Al | N | TFL (°C) | Tbob (°C) | Ep (mm) | T réd. (%) | Ep (mm) |
| **A** | 23 | 186 | 50 | 3,6 | 860/880 | 530/565 | 1,97 | 89,8 | 0,20 |
| **B** | 25 | 203 | 58 | 4,6 | 860/880 | 530/565 | 2,00 | 87 | 0,28 |

Dans la première colonne, on a repéré la bobine ; dans les deuxième à cinquième colonnes, on a indiqué en $10^{-3}$ % poids les teneurs des constituants principaux ayant une importance. Les sixième à huitième colonnes concernent les conditions de laminage à chaud : dans la sixième colonne, on a indiqué la température de fin de laminage à chaud ; dans la septième colonne, la température de bobinage ; dans la huitième colonne, l'épaisseur de la bande à chaud. Enfin les colonnes neuf et dix concernent les conditions de laminage à froid : dans la neuvième colonne, on a indiqué le taux de réduction du laminage à froid et dans la dixième colonne, l'épaisseur finale de la bande à froid.

Ces deux bandes standards ont fait l'objet de recuits différenciés suivi de second laminages à froid également différenciés.

Les températures de maintien au recuit ont varié de 650°C à 800°C, les vitesses de refroidissement ont varié de 40°C/s à 400°C/s, et les taux d'allongement au second laminage ont varié de 1% à 42%.

Outre les examens micrographiques, la caractérisation du métal issu de ces différents essais a consisté d'une part à faire des tractions sur des éprouvettes ISO 12,5x50 dans le sens du laminage et en sens travers, à l'état frais et à l'état vieilli après vieillissement à 200°C pendant 20 minutes, d'autre part de déterminer la dureté HR30T également à l'état frais et à l'état vieilli.

Ces essais ont permis de démontrer qu'il est possible d'augmenter considérablement la résistance maximale à la rupture Rm pour le même acier bas carbone calmé à l'aluminium, à taux d'allongement au second laminage à froid identique, si on pratique entre les deux laminages à froid un recuit continu selon les conditions de l'invention.

Dit autrement, ces essais ont permis de démontrer qu'il est possible d'augmenter considérablement la ductilité A% pour le même acier bas carbone calmé à l'aluminium, à résistance maximale à la rupture Rm identique, si on pratique entre les deux laminages à froid un recuit continu selon les conditions de l'invention, car le même niveau de Rm est atteint avec un taux d'allongement plus faible au cours du second laminage. Ainsi, il devient possible de réaliser des qualités d'acier bas carbone calmé à l'aluminium avec un niveau de Rm de l'ordre de 380 MPa sans nécessiter de second laminage après recuit, sauf peut être une opération d'écrouissage léger appelé skin-pass qui permet de supprimer le palier de limite d'élasticité présent sur le métal en sortie du recuit.

Incidence de la composition de l'acier

Comme indiqué précedemment, l'invention ne se situe pas dans la composition de l'acier, qui est un acier bas carbone calmé à l'aluminium standard.

Comme tous les aciers bas carbone calmés à l'aluminium, ce sont essentiellement les teneurs en carbone et en manganèse qui sont importantes :

- la teneur en carbone visée habituellement pour ce type d'acier est comprise entre 0,022% et 0,040%, car des teneurs supérieures à 0,040% conduisent à des caractéristiques mécaniques moins favorables à l'emboutissage. Pour des teneurs inférieures à 0,022%, il n'y a pas de transformation perlitique au refroidissement, et cette transformation perlitique est nécessaire et recherchée.
- la teneur en manganèse est reduite au maximum en raison d'un effet défavorable de cet élément sur la valeur du coefficient de Lankford pour des aciers non dégazés sous vide ; ainsi la teneur en manganèse visée est comprise entre 0,15 et 0,25%.

L'azote et l'aluminium sont également deux éléments qu'il convient de contrôler.

L'azote est mis en excès si on souhaite obtenir un acier dur et vieillissant. Généralement, il est compris entre 0,0035 et 0,0060%.

L'aluminium est utilisé pour calmer l'acier. Généralement, il est compris entre 0,040 et 0,070%.

Incidence des conditions de dénaturation à chaud

Les aciers bas carbone calmés à l'aluminium recuits en continu sont laminés à une température supérieure à $Ar_3$.

Le paramètre essentiel est la température de bobinage, et on préfère un bobinage froid, entre 500 et 620°C. En effet, le bobinage chaud, à une température supérieure à 650°C présente deux inconvénients :

- il génère des hétérogénéités de caractéristiques mécaniques en liaison avec les différences de vitesses de refroidissement entre le coeur et les extrémités de la bande ;
- il induit un risque de croissance anormale des grains, laquelle peut se produire pour certains couples (température de fin de laminage, température de bobinage) et peut constituer un défaut rédhibitoire aussi bien en tôle à chaud qu'en tôle à froid.

Néanmoins un bobinage chaud peut être effectué en pratiquant par exemple un bobinage sélectif : la température est plus élevée en extrémités de la bande.

Incidence des conditions de laminage à froid

De par les faibles épaisseurs finales à réaliser, le domaine du taux de réduction à froid s'étend de 75% à plus de 90%.

Les facteurs principaux qui interviennent dans la définition du taux de réduction à froid sont bien évidemment l'épaisseur finale du produit, et sur ce point on peut jouer sur l'épaisseur du produit à chaud, ainsi que des considérations métallurgiques.

Les considérations métallurgiques sont basées sur l'incidence du taux de réduction à froid sur l'état microstructural, et par voie de conséquence sur les caractéristiques mécaniques après recristallisation et recuit. Ainsi plus le taux de réduction à froid augmente, plus la température de recristallisation est faible, plus les grains sont faibles et plus Re et Rm sont élevés. En particulier, le taux de réduction peut avoir une incidence très forte sur le coefficient de Lankford.

Dans le cas d'exigences en termes de cornes d'emboutissage, il convient par exemple d'optimiser la nuance d'acier et surtout la teneur en carbone, et le taux de réduction du laminage à froid avec la dureté ou les caractéristiques mécaniques souhaitées pour obtenir un métal dit « métal sans cornes ».

Incidence du recuit

Une caractéristique importante de l'invention réside dans la température de recuit. Il est important que la température de recuit soit supérieure au point de début de transformation perlitique $Ac_1$ (de l'ordre de 720°C pour ce type d'acier).

Une autre caractéristique importante de l'invention réside dans la vitesse de refroidissement qui doit être comprise entre 100 et 500 °C/s.

Au cours du maintien de la bande à une température supérieure à 720°C, il se forme de l'austénite, riche en carbone. Le refroidissement rapide de cette austénite permet de maintenir une certaine quantité de carbone à l'état libre et/ou une précipitation de carbures à basse température, fins et dispersés. Ce carbone à l'état libre et/ou ces carbures formés à basse température favorisent le blocage des dislocations, ce qui permet d'atteindre des niveaux de caractéristiques mécaniques élevés sans nécessiter une réduction importante au cours du second laminage à froid qui suit.

Il est donc important de réaliser un refroidissement rapide, compris entre 100 et 500°C/s au moins jusqu'à une température inférieure à 350°C. Si le refroidissement rapide est arrêté avant 350°C, les atomes de carbone libres vont pouvoir se combiner et l'effet recherché ne sera pas atteint. Il est bien évident qu'un refroidissement rapide jusqu'à la température ambiante est possible.

Il est également possible d'effectuer un refroidissement à une vitesse supérieure à 500°C/s, mais la Demanderesse a constaté que au delà de 500°C/s, l'influence d'une augmentation de la vitesse de refroidissement n'est plus très significative.

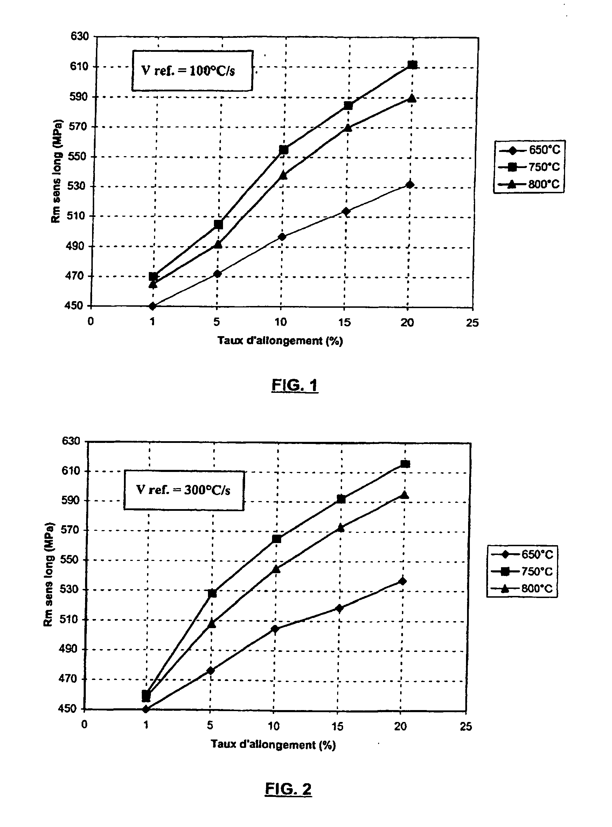

Les figures 1 et 2 présentent l'influence de la température de recuit à vitesse de refroidissement constante (Visée 100°C/s et réalisée 73 à 102°C/s sur la figure 1 ; Visée 300°C/s et réalisée 228 à 331°C/s sur la figure 2) sur la résistance maximale à la rupture Rm.

On constate sur ces figures une nette augmentation de Rm à taux d'allongement du second laminage identique pour les aciers recuits à 740°C et à 780°C par rapport aux mêmes aciers recuits à 650°C et à 680°C.

Toutefois, cette influence de la température de recuit sur la résistance maximale à la rupture Rm n'est pas très perceptible pour des taux d'allongement au second laminage à froid inférieurs à 3%. Elle ne devient vraiment significative qu'à partir de 5% d'allongement au second laminage à froid.

Une température trop élevée, supérieure à 800°C, entraîne une précipitation, au moins partielle de l'azote sous la forme de nitrures d'aluminium. Cet azote précipité ne participe plus au durcissement de l'acier, ce qui a pour effet une baisse de la résistance maximale à la rupture Rm. Ce phénomène est entrevu sur la figure 2 sur laquelle on remarque, pour des taux d'allongement supérieurs à 10 %, une baisse de l'augmentation de la résistance maximale à la rupture Rm entre l'échantillon recuit à 750°C et l'échantillon recuit à 800°C.

Le temps de maintien de la bande entre 720°C et 800°C doit être suffisant pour remettre tout le carbone correspondant à l'équilibre en solution. Un maintien pendant 10 secondes est suffisant pour s'assurer cette remise en solution de la quantité de carbone correspondant à l'équilibre pour les aciers dont la teneur en carbone est comprise entre 0,020 et 0,035%, et un maintien au dela de 2 minutes, bien que possible, est inutile et coûteux.

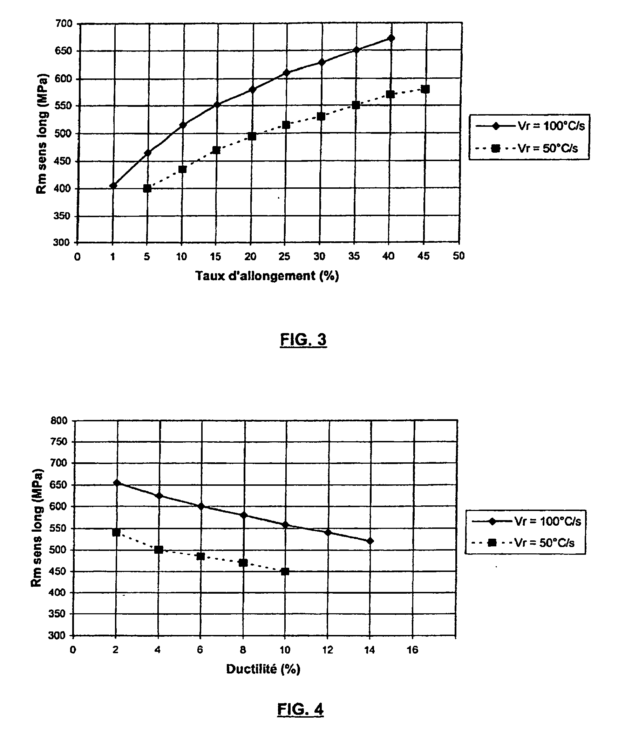

Les figures 3 et 4 présentent l'influence de la vitesse de refoidissement à température de recuit constante (750°C) maintenue pendant 20 secondes.

Comme on peut le voir sur la figure 3, à 10% d'allongement au second laminage à froid, la résistance maximale à la rupture Rm de l'acier est égale à environ 520 MPa si la vitesse de refroidissement est égale à 100°C/s, alors qu'elle n'atteint que 440 MPa si la vitesse de refroidissement est égale à 50°C/s.

On peut donc réaliser un acier bas carbone calmé à l'aluminium dont la valeur de Rm est égale à 520 MPa avec seulement 10% d'allongement au second laminage à froid si la vitesse de refroidissement est égale à 100°C/s, alors qu'il faut effectuer un second laminage à froid avec un taux d'allongement de 25% si la vitesse de refroidissement n'est que de 50°C/s.

Ce plus faible taux d'allongement au second laminage à froid permet de moins dégrader la ductilité de l'acier. On voit ainsi sur la figure 4 que l'acier dont Rm est égal à 520 MPa présente une ductilité A% égale à 14 lorsque la vitesse de refroidissement est égale à 100°C/s, alors qu'elle est égale à 3,5 lorsque la vitesse de refroidissement est égal à 50°C/s.

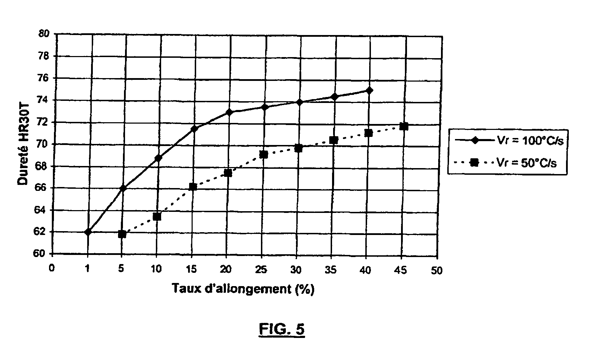

Cette constatation est également valable sur la dureté de l'acier. Comme on le voit sur la figure 5, pour un même taux d'allongement au second laminage à froid, la dureté de l'acier augmente si la vitesse de refroidissement est égale à 100°C/s. Cette augmentation de la dureté est due à une teneur en carbone libre plus élevée et/ou à la présence des précipités fins et dispersés.

Les analyses micrographiques des échantillons ont permis de constater que le nombre de grains par mm$^2$ est plus important (supérieur à 20000), et que les carbures, lorsqu'ils se sont formés sont de la cémentite intergranulaire.

Ainsi ce procédé de fabrication permet de réaliser un d'acier bas carbone calmé à l'aluminium pour emballage, comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables, qui présente à l'état vieilli un taux d'allongement A% satisfaisant la relation :

$$(670 - Rm) / 14 \leq A\% \leq (720 - Rm) / 17$$

**Revendications**

1. Procédé de fabrication d'une bande d'acier bas carbone calmé à l'aluminium pour emballage, dans lequel :

   - on approvisionne une bande d'acier laminée à chaud comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables,
   - on effectue un premier laminage à froid de la bande,
   - on soumet la bande laminée à froid à un recuit,
   - on effectue éventuellement un laminage à froid secondaire,

   **caractérisé en ce que** le recuit est un recuit continu dont le cycle comporte une montée en température jusqu'à une température supérieure à la température correspondant à l'eutectoïde de l'acier, un maintien de la bande au dessus de cette température pendant une durée supérieure à 10 secondes, et un refroidissement rapide de la bande jusqu'à une température inférieure à 350°C à une vitesse de refroidissement comprise entre 100°C par seconde et 500°C par seconde.

2. Procédé selon la revendication 1, **caractérisé en ce que** la bande est maintenue au cours du recuit à une température comprise entre 720°C et 800°C, pendant une durée de 10 secondes à 2 minutes.

3. Procédé selon la revendication 1, **caractérisé en ce que** la bande est refroidie à une vitesse supérieure à 100°C par seconde jusqu'à la température ambiante.

4. Tôle d'acier bas carbone calmé à l'aluminium pour emballage, comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables, fabriquée selon le procédé des revendications 1 à 3, **caractérisé en ce qu'**elle présente à l'état vieilli un taux d'allongement A% satisfaisant la relation :

$$(670 - Rm) / 14 \leq A\% \leq (720 - Rm) / 17$$

Rm étant la résistance maximale à la rupture de l'acier, exprimée en MPa.

5. Tôle d'acier selon la revendication 4, **caractérisée en ce que** l'acier comporte du carbone à l'état libre et/ou quelques carbures précipités à basse température, et présente un nombre de grains par mm$^2$ supérieur à 20000.

**Patentansprüche**

1. Verfahren zur Herstellung eines Bands aus aluminiumberuhigtem Stahl mit geringem Kohlenstoffgehalt zur Verpackung, wobei:

   - ein Band aus warmgewaltzem Stahl bereitgestellt wird, welches zwischen 0,022 und 0,035 Gewichts-% Kohlenstoff, zwischen 0,15 und 0,25 Gewichts-% Mangan, zwischen 0,040 und 0,070 Gewichts-% Aluminium, zwischen 0,0035 und 0,0060 Gewicht-% Stickstoff aufweist, wobei der Rest Eisen und verbleibende unvermeidbare Verunreinigungen sind,
   - ein erstes Kaltwalzen des Bands durchgeführt wird,
   - das kaltgewalzte Band einer Glühbehandlung unterworfen wird,
   - gegebenenfalls ein zweites Kaltwalzen durgeführt wird,

   **dadurch gekennzeichnet, dass** die Glühbehandlung eine kontinuierliche Glühbehandlung ist, deren Zyklus einen Temperaturanstieg bis zu einer Temperatur oberhalb der Temperatur, welche dem Eutektoid des Stahls entspricht, eine Aufrechterhaltung des Bands oberhalb dieser Temperatur für einen Zeitraum größer als 10 Sekunden, eine schnelle Abkühlung des Bands bis zu einer Temperatur unterhalb 350 °C mit einer Kühlungsgeschwindigkeit zwischen 100 °C pro Sekunde und 500 °C pro Sekunde aufweist.

2. Verfahren nach Anspruch 1, **dadurch gekennzeichnet, dass** das Band während der Glühbehandlung bei einer Temperatur zwischen 720 °C und 800 °C für einen Zeitraum von 10 Sekunden bis 2 Minuten gehalten wird.

3. Verfahren nach Anspruch 1, **dadurch gekennzeichnet, dass** das Band mit einer Kühlungsgeschwindigkeit größer als 100 °C pro Sekunde bis zur Raumtemperatur abgekühlt wird.

4. Blech aus aluminiumberuhigtem Stahl mit geringem Kohlenstoffgehalt zur Verpackung, welches zwischen 0,022 und 0,035 Gewichts-% Kohlenstoff, zwischen 0,15 und 0,25 Gewichts-% Mangan, zwischen 0,040 und 0,070 Gewichts-% Aluminium, zwischen 0,0035 und 0,0060 Gewicht-% Stickstoff aufweist, wobei der Rest Eisen und verbleibende unvermeidbare Verunreinigungen sind, hergestellt nach dem Verfahren der Ansprüche 1 bis 3, **dadurch gekennzeichnet, dass** es im Gebrauchszustand eine Dehnungsrate A% aufweist, welche die Gleichung erfüllt:

$$(670 - Rm) / 14 \leq A\% \leq (720 - Rm) / 17$$

wobei Rm die maximale Bruchfestigkeit des Stahls ausgedrückt in MPa ist.

5. Blech aus Stahl nach Anspruch 4, **dadurch gekennzeichnet, dass** der Stahl Kohlenstoff im freien Zustand und/oder einige bei niedriger Temperatur ausgefällte Carbide aufweist, und eine Anzahl von Körnern pro mm$^2$ höher als 20000 aufweist.

**Claims**

1. Process for manufacturing a strip of aluminium-killed low-carbon steel for packaging, in which:

   - a hot-rolled strip of steel comprising by weight between 0.022 and 0.035 % carbon, between 0.15 and 0.25 % manganese, between 0.040 and 0.070 % aluminium, between 0.0035 and 0.0060 % nitrogen, the remainder being iron and inevitable residual impurities, is provided,
   - a first cold-rolling of the strip is carried out,
   - the cold-rolled strip is subjected to annealing,
   - optionally, a secondary cold-rolling is carried out,

   **characterised in that** the annealing is a continuous annealing, the cycle of which comprises increasing the temperature up to a temperature above the temperature corresponding to the eutectoid of the steel, holding the strip above that temperature for a period greater than 10 seconds, and rapidly cooling the strip down to a temperature less than 350°C at a cooling rate between 100°C per second and 500°C per second.

2. Process according to claim 1, **characterised in that** during the annealing the strip is held at a temperature between 720°C and 800°C, for a period of from 10 seconds to 2 minutes.

3. Process according to claim 1, **characterised in that** the strip is cooled at a rate of more than 100°C per second down to ambient temperature.

4. Sheet of aluminium-killed low-carbon steel for packaging, comprising by weight between 0.022 and 0.035 % carbon, between 0.15 and 0.25 % manganese, between 0.040 and 0.070 % aluminium, between 0.0035 and 0.0060 % nitrogen, the remainder being iron and inevitable residual impurities, manufactured in accordance with the process of claims 1 to 3, **characterised in that** it has, in the aged state, a degree of elongation A % satisfying the relationship:

$$(670 - Rm)/14 \leq A \% \leq (720 - Rm)/17$$

   Rm being the ultimate tensile strength of the steel, expressed in MPa.

5. Sheet of steel according to claim 4, **characterised in that** the steel includes carbon in the free state and/or some carbides precipitated at low temperature, and has a number of grains per $mm^2$ which is greater than 20000.

**FIG. 1**

**FIG. 2**

9

**FIG. 3**

**FIG. 4**

**FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2086425 A